# EUROPÄISCHE PATENTSCHRIFT

(11) **EP 0 599 035 B1**
(45) Veröffentlichungstag und Bekanntmachung des Hinweises auf die Patenterteilung: **05.03.1997**
(21) Anmeldenummer: 93116297.8
(22) Anmeldetag: 08.10.1993
(51) Int. Cl.: F42B 10/46, H01Q 1/42

(54) **Verbindungsanordnung zum Verbinden eines einen Suchkopf abdeckenden Domes mit der Struktur eines Flugkörpers**
Connecting arrangement for combining a dome covering a seeker head with the structure of a missile
Dispositif de connexion pour relier un dôme recouvrant une tête chercheuse avec le corps d'un missile

(30) Priorität: 20.10.1992 DE 4235266
(43) Veröffentlichungstag der Anmeldung: 01.06.1994
(73) Patentinhaber: Bodenseewerk Gerätetechnik GmbH, 88662 Überlingen (DE)
(72) Erfinder: Fisch, Peter, D-88662 Ueberlingen (DE); Kordulla, Hans, D-88696 Owingen (DE)
(74) Vertreter: Weisse, Jürgen, Dipl.-Phys. Patentanwalt

(56) Entgegenhaltungen:
- EP-A- 0 079 684
- DE-A- 2 222 952
- DE-A- 3 342 958
- DE-C- 4 124 011
- GB-A- 2 107 127

## Beschreibung

Die Erfindung betrifft eine Verbindungsanordnung zum Verbinden eines einen Suchkopf abdeckenden Domes mit der Struktur eines Flugkörpers mit Hilfe eines über den Rand des Domes greifenden, den Dom formschlüssig haltenden und an die Struktur des Flugkörpers angeschweißten Halteringes. Eine derartige Verbindungsanordnung ist bereits bekannt.

Zielsuchende Flugkörper enthalten in ihrer Spitze einen Suchkopf. Der Suchkopf erfaßt ein Ziel und liefert Lenksignale, welche den Flugkörper zu dem Ziel führen. Der Suchkopf ist dabei durch einen "Dom" abgedeckt. Der Dom ist eine schalenförmige Haube, die mit der Struktur des Flugkörpers verbunden ist und das vordere Ende des Flugkörpers bildet. Dieser Dom muß für die Wellenlängen, bei denen der Suchkopf arbeitet, durchlässig sein. In vielen Fällen arbeiten Suchköpfe im Infraroten. Es bietet Schwierigkeiten, einen solchen Dom mit der Struktur des Flugkörpers zu verbinden. Das elektromagnetisch durchlässige Material des Doms ist sehr spröde und empfindlich gegen mechanische Spannungen. Der Dom muß dicht mit der Struktur oder Zelle des Flugkörpers verbunden sein, damit der hochempfindliche Suchkopf nicht durch Umwelteinflüsse beschädigt werden kann. Die Verbindung zwischen Dom und Struktur muß starke Temperaturschwankungen vertragen. In der Flugphase des Flugkörpers treten hohe Temperaturen auf. Es wird auch vielfach die Forderung erhoben, daß solche Flugkörper wie normale Munition über Jahrzehnte hinweg ohne Wartung funktionsfähig bleiben.

Es sind verschiedene Versuche gemacht worden, den Dom durch Lötverfahren mit der Struktur des Flugkörpers zu verbinden. Solche Lötverfahren rufen aber mechanische Spannungen in dem Dom hervor. Sie erfordern aufwendige spezielle Fertigungsverfahren. Spannungen werden auch durch unterschiedliche Wärmeausdehnung der Teile verursacht. Es ist versucht worden, diese Probleme durch die Verwendung spezieller, sehr teurer Werkstoffe, z.B. von Niob- oder Tantal-Werkstoffen, zu lösen. Es ist auch versucht worden, die Teile miteinander zu verkleben. An solche Klebungen werden jedoch hohe Anforderungen gestellt. Übliche Klebungen sind für Hochgeschwindigkeits-Flugkörper, bei denen hohe Temperaturen auftreten, ungeeignet. Es kann auch nicht sichergestellt werden, daß Klebungen über lange Zeiträume hinweg unverändert bleiben.

Durch die DE-C-41 24 011 ist ein Feedhorn für eine Satelliten-Empfangsanlage bekannt. Dabei ist eine mit Teflon beschichtete Gewebefolie um einen Rand des Feedhorns herumgelegt. Die Folie ist am Rand mit einem Zahnprofil versehen, um ein Herumlegen der Folie ohne Falten- oder Wellenbildung zu ermöglichen. Die Folie wird durch einen umgebördelten Haltering festgeklemmt.

Die Folie ist ein flexibles Element. Sie ist reibschlüssig zwischen dem Rand des Feedhorns und dem umgebördelten Haltering gehalten. Die oben geschilderten bei Flugkörpern auftretenden Probleme treten bei einem Feedhorn für eine Satelliten-Empfangsanlage nicht auf. Die dort beschriebene Lösung mit einer reibschlüssig gehaltenen, flexiblen Folie wäre bei einem Flugkörper nicht anwendbar.

Der Erfindung liegt die Aufgabe zugrunde, eine einfache und zuverlässige Verbindungsanordnung zur Verbindung eines Doms mit der Struktur eines Flugkörpers zu schaffen.

Erfindungsgemäß wird diese Aufgabe dadurch gelöst, daß ohne zusätzliche Verbindung zwischen Dom und Haltering längs des Randes des Domes unter dem Haltering eine Nut vorgesehen ist, in welcher ein flexibles Dichtmittel zur Abdichtung zwischen Haltering und Dom untergebracht ist.

Nach der Erfindung wird somit der Dom nicht "stoffschlüssig" mit der Struktur des Flugkörpers verbunden sondern nur formschlüssig von dem Haltering gehalten. Die Dichtfunktion wird von der Haltefunktion getrennt. Die Dichtung erfolgt mittels eines Dichtmittels, das in einer Nut längs des Randes des Domes unter dem Haltering vorgesehen ist. Es hat sich überraschenderweise gezeigt, daß eine solche einfache Anordnung ohne stoffschlüssige Verbindung zwischen Dom und

Haltering, also ohne Löten oder Kleben, den gestellten Anforderungen zu genügen vermag.

Der Dom ist spannungsarm in die Struktur eingebunden. Der Haltering kann aus einem Werkstoff hergestellt werden, der in bezug auf seine Wärmeausdehnung im relevanten Temperaturbereich an die Wärmeausdehnung des für den Dom verwendeten Werkstoffs angepaßt ist. Der Dom kann sich in der Fassung verformen, ohne daß wesentliche Spannungen erzeugt werden. Dadurch wird die Lebensdauer des Domes wesentlich erhöht. Der Dom ist hochtemperaturbeständig gefaßt. Dazu braucht nicht auf aufwendige und Spannungen induzierende Lötverfahren oder auf Klebeverfahren zurückgegriffen zu werden. Es können preisgünstige Werkstoffe für die Fassung verwendet werden. Der Dom kann leicht für Wartungsarbeiten am Suchkopf gelöst werden. Das Bauvolumen im Bereich des Suchkopfes ist sehr begrenzt. Die Erfindung gestattet minimalen Bauraum.

Ausgestaltungen der Erfindung sind Gegenstand der Unteransprüche.

Zwei Ausführungsbeispiele der Erfindung sind nachstehend unter Bezugnahme auf die zugehörige Zeichnung näher erläutert.
- Fig.1: zeigt einen Längsschnitt eines Domes und der angrenzenden Struktur des Flugkörpers.

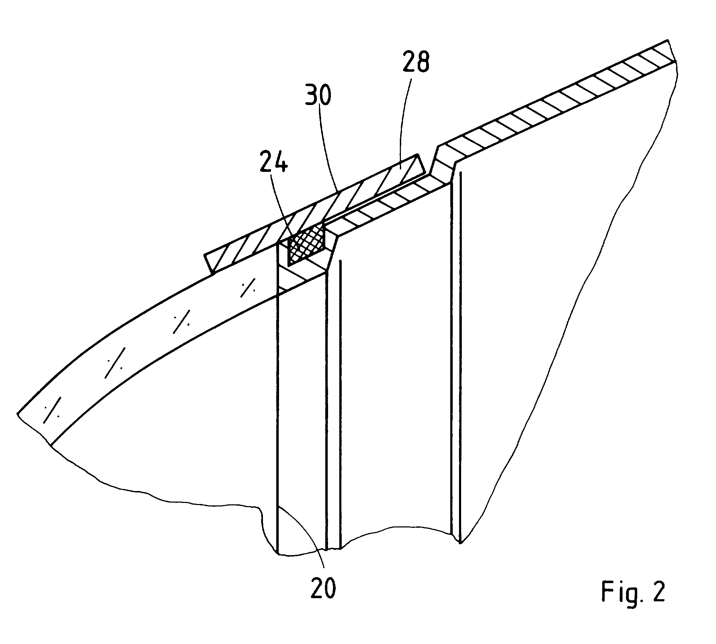

- Fig.2: zeigt eine Einzelheit von Fig.1 in vergrößertem Maßstab.
- Fig.3: ist zeigt einen Längsschnitt des Domes und der angrenzenden Struktur des Flugkörpers bei einer anderen Ausführung einer Verbindungsanordnung.
- Fig.4: zeigt in vergrößertem Maßstab eine Einzelheit "X" von Fig.3.
- Fig.5: ist eine geschnitten-perspektivische Darstellung des Domes und der angrenzenden Struktur.

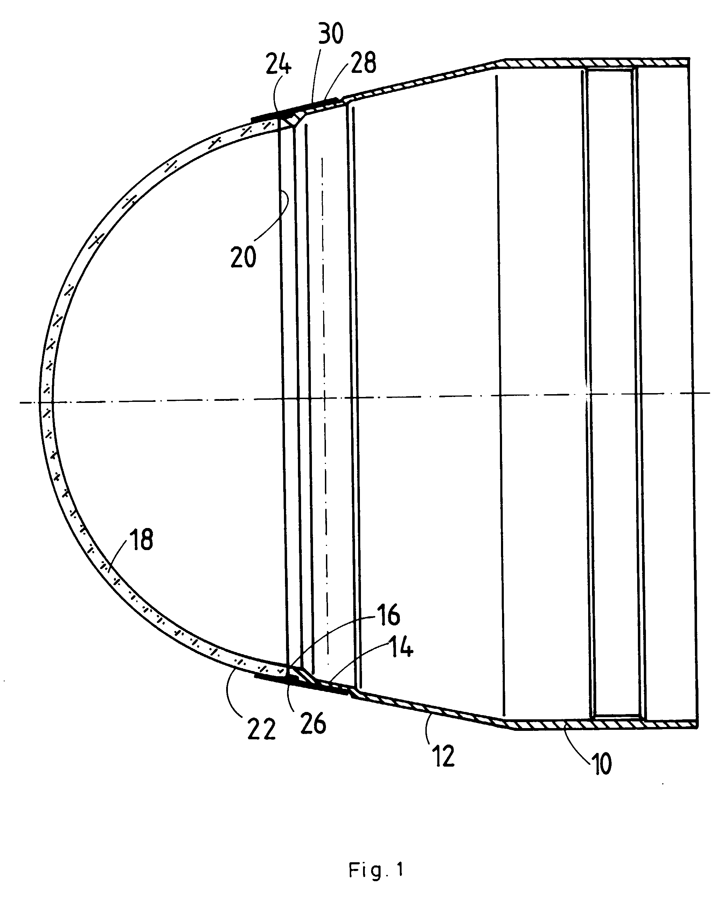

In Fig.1 ist mit 10 die Struktur oder Zelle eines Flugkörpers bezeichnet. Die Struktur 10 ist generell rohrförmig. Am vorderen Ende befindet sich ein schwach konischer Abschnitt 12. An den konischen Abschnitt 12 schließt sich ein flachstufenartig eingezogener Abschnitt 14 an. An den Abschnitt 14 schließt sich ein nochmals stufenartig eingezogener und gleichzeitig verdickter Randteil 16 an.

Mit 18 ist ein Dom bezeichnet, der aus einem spröden, infrarotdurchlässigen Material, z.B. Saphir, Magnesiumfluorid, Zinksulfid, Silizium oder geeigneten Gläsern, besteht. Der Dom ist ein etwa halbkugelförmiger Hohlkörper. Der Dom 18 weist an seinem Rand eine plane Stirnfläche 20 auf. Die Stirnfläche 20 sitzt vor der ebenfalls planen, zur Flugkörperlängsachse senkrechten Stirnfläche des Randteils 16.

Die Außenfläche des Abschnitts 14 liegt etwa tangential zu der Außenfläche 22 des Domes 18. Die Stirnfläche 20 des Domes und der stufenartig eingezogene Randteil 16 bilden daher eine Nut 24. Die Nut ist mit einem eingespritzten, flexiblen Dichtmittel 26 gefüllt. Das Dichtmittel ist ein sehr ausgasarmer, säurefreier Silikonkautschuk.

Ein Haltering 28 liegt auf der Außenfläche des Abschnitts 14 der Struktur und erstreckt sich über die Nut 24 und den Rand des Domes 18. Der Haltering 28 ist mit dem Dom 18 nicht durch Löten, Kleben o. dgl. stoffschlüssig verbunden. Der Haltering 28 ist an dem Abschnitt 14 der Struktur 10 durch Punktschweißen in Punkten 30 verbunden.

Durch den Haltering 28 und den Randteil 16 ist der Dom an seinem Rand formschlüssig gehalten. Die Abdichtung erfolgt durch das Dichtmittel 26.

Statt des Silikonkautschuks können auch hochduktile Klebstoffe als Dichtmittel verwendet werden.

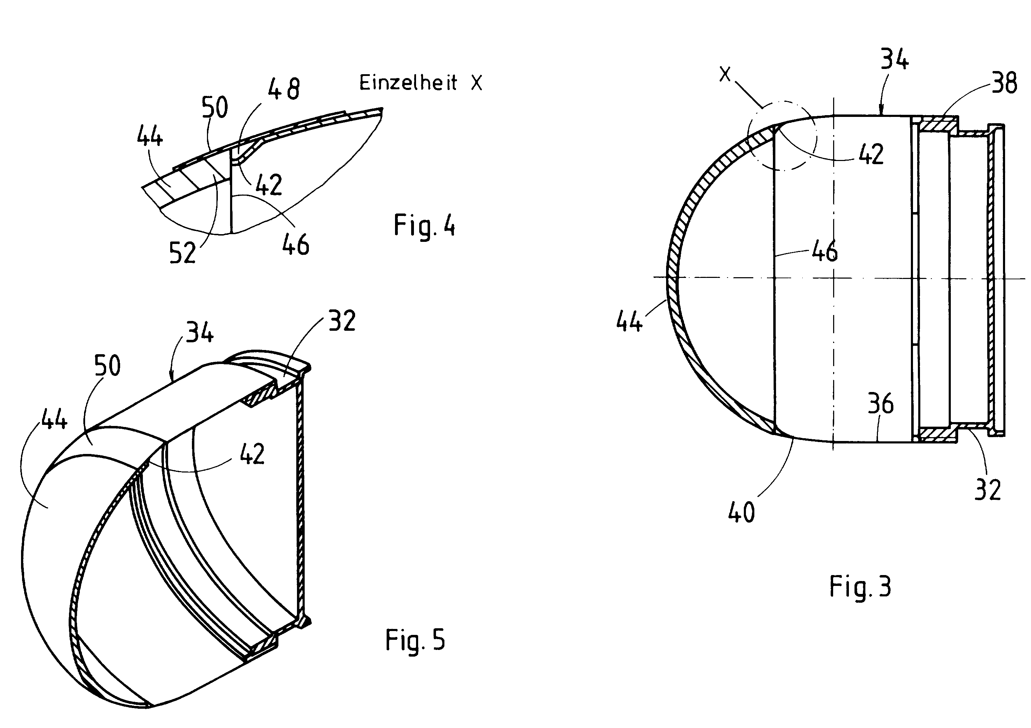

Bei der Ausführung nach Fig.3 bis 5 ist mit 32 ein ringförmiger, starrer Strukturteil des Flugkörpers bezeichnet. An dem Strukturteil 32 ist ein Blechmantel 34 befestigt. Der Blechmantel 34 weist einen zylindrischen, hinteren Abschnitt 36 auf. Der Blechmantel 34 ist mit dem hinteren, strukturteilseitigen Rand des Abschnitts 36 mit dem Strukturteil 32 verbunden. An den zylindrischen Abschnitt 36 schließt sich nach vorn hin ein im wesentlichen sphärischer Abschnitt 40 an. An den sphärischen Abschnitt 40 schließt sich wiederum der eingezogene Randteil 42 an. Ein sphärischer, schalenförmiger Dom 44 liegt mit seiner planen Stirnfläche 46 an dem eingezogenen Randteil 42 an. Die Stirnfläche 46 und der eingezogene Randteil 42 bilden eine Ringausnehmung 48 oder Nut. Diese Ringausnehmung 48 wird nit einem hochduktilen Klebstoff als Dichtung ausgefüllt. Ein Haltering 50 aus Blech ist mit dem Blechmantel 34 in dem sphärischen Abschnitt 40 des Blechmantels 34 verbunden. Der Haltering 50 ist ebenfalls im wesentlichen sphärisch. Der Haltering 50 greift über die Ringausnehmung 48 und über den Rand 52 des Domes 44.

## Patentansprüche

1. Verbindungsanordnung zum Verbinden eines einen Suchkopf abdeckenden Domes (18) mit der Struktur (10) eines Flugkörpers mit Hilfe eines über den Rand des Domes (18) greifenden, den Dom (18) formschlüssig haltenden und mit der Struktur (10) des Flugkörpers verbundenen Halteringes (28), **dadurch gekennzeichnet, daß** ohne zusätzliche stoffschlüssige Verbindung zwischen Dom (18) und Haltering (28) längs des Randes des Domes (18) unter dem Haltering (28) eine Ringausnehmung (24) vorgesehen ist, in welcher ein flexibles Dichtmittel (26) zur Abdichtung zwischen Haltering (28) und Dom (18) untergebracht ist.

2. Verbindungsanordnung nach Anspruch 1, **dadurch gekennzeichnet, daß**
(a) die Struktur (10) einen eingezogenen Randteil (16) aufweist,
(b) der Dom (18) mit seinem Rand an der Stirnfläche des eingezogenen Randteils (16) anliegt, wobei die Ringausnehmung (24) zwischen dem eingezogenen Randteil (16) der Struktur (10) und dem Rand des Domes (18) gebildet ist.

3. Verbindungsanordnung nach Anspruch 2, **dadurch gekennzeichnet, daß** die Struktur (10) an ihrem domseitigen Ende einen schwach sich verjüngenden Abschnitt (12) aufweist.

4. Verbindungsanordnung nach Anspruch 3, **dadurch gekennzeichnet, daß** der schwach sich verjüngende Abschnitt schwach konisch ist.

5. Verbindungsanordnung nach Anspruch 3, **dadurch gekennzeichnet, daß** der schwach sich verjüngende Abschnitt sphärisch ist.

6. Verbindungsanordnung nach einem der Ansprüche 1 bis 5, **dadurch gekennzeichnet, daß** das Dichtmittel (26) in die Ringausnehmung (24) eingespritzt ist.

7. Verbindungsanordnung nach Anspruch 3, **dadurch gekennzeichnet, daß** der Dom (16) mit seiner Stirnfläche (20) an der Stirnfläche des Randteils (16) anliegt, wobei die Ringausnehmung (24) von dem Randteil (16) und der Stirnfläche (20) des Domes (18) gebildet ist.

8. Verbindungsanordnung nach Anspruch 7, **dadurch gekennzeichnet, daß**
(a) an den schwach sich verjüngenden Abschnitt (12) sich ein flach-stufenförmig eingezogener Abschnitt (14) anschließt und
(b) der eingezogene Randteil (16) wiederum an den flachstufenförmig eingezogenen Abschnitt (14) anschließt und mit seiner Außenfläche gegen die Außenfläche des flachstufenförmig eingezogenen Abschnitts (14) zurückgesetzt ist, und
(c) der Haltering auf der Außenfläche des flach-stufenförmig eingezogenen Abschnitts (14) aufliegt, mit diesem verbunden ist und sich über den Randteil (16) und den Rand des Domes (18) erstreckt.

9. Verbindungsanordnung nach einem der Ansprüche 1 bis 8, dadurch gekennzeichnet, daß der Haltering (28) durch Punktschweißen mit der Struktur (10) verbunden ist.

10. Verbindungsanordnung nach Anspruch 2, **dadurch gekennzeichnet, daß**
(a) die Struktur des Flugkörpers an ihrem vorderen Ende einen Blechmantel (34) aufweist, der an seinem zylindrischen rückwärtigen Rand mit einem Strukturteil (32) verbunden ist und an seinem sucherseitigen, vorderen Rand einen sphärischen Abschnitt (40) aufweist, und
(b) an den sphärischen Abschnitt (40) sich der nach innen eingezogene Randteil (42) anschließt.

## Claims

1. Connection arrangement for connecting a dome (18) covering a seeker head with the structure (10) of a missile by means of a retainer ring (28), which extends over the edge of the dome (18), positively holds the dome (18) and which is connected with the structure of the missile, **characterized in that**, without additional connection of the material surfaces between the dome (18) and the retainer ring (28) an annular recess is provided along the edge of the dome (18) under the retainer ring (28), in which annular recess a flexible sealing material (26) for the sealing between the retainer ring (28) and the dome (18) is accommodated.

2. Connection arrangement as claimed in claim 1, **characterized in that**
(a) the structure (10) has a reduced-diameter edge portion (16)
(b) the dome (18) at its edge engages the end surface of the reduced-diameter edge portion (16), whereby the annular recess (24) is formed between the reduced-diameter edge portion (16) of the structure (10) and the edge of the dome (18).

3. Connection arrangement as claimed in claim 2, **characterized in that** the sturcture (10) has a slightly tapering section (12) at its dome-side end.

4. Connection arrangement as claimed in claim 3, **characterized in that** the a slightly tapering section is slightly conical.

5. Connection arrangement as claimed in claim 3, **characterized in that** the a slightly tapering section is slightly sperical.

6. Connection arrangement as claimed in one of the claims 1 to 5, **characterized in that** sealing material (26) are injected into the annular recess (24).

7. Connection arrangement as claimed in claim 3, **characterized in that** the dom (16) at its end surface (20) engages the end surface of the edge portion (16), whereby the annular recess (24) is formed by the edge portion (16) and the end surface (20) of the dome (18).

8. Connection arrangement as claimed in claim 7, **characterized in that**
(a) a flat-stepped reduced-diameter section (14) communicates with the slightly tapered section (12)
(b) the reduced-diameter edge portion (16), in turn, communicates with the flat-stepped reduced-diameter section (14) and is offset to the rear with its outer surface relative to the outer surface of the flat-stepped reduced-diameter section (14) and
(c) the retainer ring engages with the outer surface of the flat-stepped reduced-diameter section (14), is connected therewith and extends over the edge portion (16) and the edge of the dome (18).

9. Connection arrangement as claimed in anyone of the claims 1 to 8, **characterized in that** the retainer ring (28) is connected to the structure by point welding.

10. Connection arrangement as claimed in claim 2, **characterized in that**
(a) the structure of the missile at its front end has a sheet metal jacket (34), which is connected at its cylindrical rear edge with a section of the structure (32) and at its seeker-side, front edge has a sperical section (40), and
(b) the reduced-diameter edge portion (42) communicates with the sperical section (40).

## Revendications

1. Disposition de connexion destinée à relier un dôme (18) recouvrant une tête chercheuse à la structure (10) d'un missile à l'aide d'une bague de maintien (28) reliée à la structure (10) du missile, maintenant le dôme (18) avec une force exercée sur toute la surface et mordant sur le bord du dôme (18), **caractérisée par le fait qu'**un creux de bague (24) est prévu le long du bord du dôme (18) sous la bague de maintien (28), sans connexion supplémentaire ayant une force exercée sur la matière entre le dôme (18) et la bague de maintien (28), creux de bague dans lequel un produit d'étanchéité souple (26) destiné à rendre étanche est placé entre la bague de maintien (28) et le dôme (18).

2. Disposition de connexion selon la revendication 1, **caractérisée par le fait que**
(a) la structure (10) présente un élément de bord rentré (16),
(b) le dôme (18) avec son bord se trouve adjacent à la surface frontale de l'élément de bord rentré (16), le creux de bague (24) étant formé entre l'élément de bord rentré (16) de la structure (10) et le bord du dôme (18).

3. Disposition de connexion selon la revendication 2, **caractérisée par le fait que** la structure (10) présente à son extrémité située du côté du dôme une section se rétrécissant légèrement (12).

4. Disposition de connexion selon la revendication 3, **caractérisée par le fait que** la section se rétrécissant légèrement est légèrement conique.

5. Disposition de connexion selon la revendication 3, **caractérisée par le fait que** la section se rétrécissant légèrement est sphérique.

6. Disposition de connexion selon l'une des revendications 1 à 5, **caractérisée par le fait que** le produit d'étanchéité (26) est injecté dans le creux de bague (24).

7. Disposition de connexion selon la revendication 3, **caractérisée par le fait que** le dôme (16) avec sa surface frontale (20) est adjacent à la surface frontale de l'élément de bord (16), le creux de bague (24) étant formé de l'élément de bord (16) et de la surface frontale (20) du dôme (18).

8. Disposition de connexion selon la revendication 7, **caractérisée par le fait que**
(a) une section rentrée par paliers plans (14) se raccorde à la section se rétrécissant légèrement (12) et
(b) l'élément de bord rentré (16) se raccorde à son tour à la section rentrée par paliers plans (14) et est décalé en arrière avec sa surface extérieure contre la surface extérieure de la section rentrée par paliers plans (14), et
(c) la bague de maintien est posée sur la surface extérieure de la section rentrée par paliers plans (14) et est reliée à celle-ci et s'étire par dessus l'élément de bord (16) et le bord du dôme (18).

9. Disposition de connexion selon l'une des revendications 1 à 8, **caractérisée par le fait que** la bague de maintien (28) est reliée à la structure (10) par soudage par points.

10. Disposition de connexion selon la revendication 2, **caractérisée par le fait que**
(a) la structure du missile présente à son extrémité avant une enveloppe en tôle (34) qui est reliée à son bord cylindrique arrière à un élément de structure (32) et qui présente à son bord avant situé du côté du chercheur une section sphérique (40), et
(b) l'élément de bord rentré vers l'intérieur (42) se raccorde à la section sphérique (40).
